# DEMANDE DE BREVET EUROPEEN

(11) **EP 1 024 050 A1**
(43) Date de publication de la demande: **02.08.2000**
(21) Numéro de dépôt: 00400156.6
(22) Date de dépôt: 21.01.2000
(51) Int. Cl.: B60Q 1/52

(54) **Dispositif d'aide à la conduite d'un véhicule automobile**

(30) Priorité: 29.01.1999 FR 9901036
(71) Demandeur: RENAULT, 92109 Boulogne-Billancourt (FR)
(72) Inventeur: Toffolo, Gabriel, 92500 Rueil Malmaison (FR); Pabot, Frédéric, 69006 Lyon (FR)

(57) **Abrégé**

Le dispositif comprend des moyens (1,2,3) pour diagnostiquer automatiquement l'imminence d'un changement de direction d'un véhicule précédent, ces moyens étant sensibles à l'activation d'un indicateur visuel de changement de direction à commande manuelle, installé dans le véhicule précédent. Les moyens de diagnostic comprennent une caméra vidéo (1) d'enregistrement d'images représentatives de l'espace situé en avant du véhicule, des moyens (2) de traitement des images vidéo enregistrées, et des moyens d'analyse (3) des résultats du traitement propres à détecter l'état d'activation de l'indicateur visuel.

## Description

La présente invention est relative à un dispositif d'aide à la conduite d'un véhicule automobile, comprenant des moyens de surveillance des évolutions des véhicules voisins.

On a proposé d'équiper les véhicules automobiles de tels moyens de surveillance, propres à suppléer ou aider le conducteur d'un véhicule dans les manoeuvres qui sont nécessaires pour éviter des collisions entre des véhicules circulant sur une même chaussée de circulation automobile.

Les dispositifs "anticollision" connus à cet effet comprennent couramment des moyens de télémétrie radar ou laser permettant de déterminer la position, la vitesse et l'accélération relatives d'un véhicule situé dans le champ de ces moyens de télémétrie, en avant du véhicule équipé d'un tel dispositif. On peut citer à cet égard le dispositif décrit dans la demande de brevet européen n° 605 104 qui surveille notamment les déplacements transversaux des véhicules qui précèdent immédiatement le véhicule équipé de ce dispositif, aussi bien dans la même voie de circulation que dans les voies immédiatement adjacentes à celle-ci. Cette surveillance permet de commander automatiquement le freinage ou l'accélération du véhicule de manière à maintenir une distance de sécurité entre celui-ci et les véhicules surveillés.

Ces dispositifs souffrent généralement de l'étroitesse de l'angle du champ surveillé, qui ne permet pas d'analyser précisément les déplacements transversaux des véhicules précédents quand ceux-ci sont situés à courte distance du véhicule équipé d'un tel dispositif.

Pour améliorer les performances de ces dispositifs à télémètre radar ou laser, on a pensé à combiner les informations qu'ils délivrent avec celles que l'on peut tirer d'une analyse des images fournies par une caméra vidéo, d'angle de champ plus large, braquée sur l'espace situé en avant du véhicule.

Dans tous les cas, cependant, ces dispositifs ne sont sensibles qu'à des déplacements de véhicules déjà amorcés, ceci évidemment en vertu du principe de causalité. Le temps nécessaire au traitement des signaux enregistrés retarde encore l'émission des signaux significatifs de ces déplacements. Il s'ensuit que les mesures correctrices déclenchées par ces dispositifs par une action sur des moyens de freinage ou d'accélération du véhicule, par exemple, et visant à assurer la sécurité du véhicule et de ses passagers ne peuvent être engagées qu'avec retard, au détriment de cette sécurité, par rapport à l'instant de déclenchement de ces mesures quand elles sont commandées par un conducteur attentif à l'activation des indicateurs visuels de changement de direction de ces véhicules, couramment appelés "clignotants" ou "feux clignotants".

En effet, ces indicateurs visualisent les intentions de manoeuvre des conducteurs des véhicules précédents et permettent donc de commencer à corriger, éventuellement, la distance qui sépare le véhicule suivant de ceux-ci, avant même que ces intentions soient suivies d'effet.

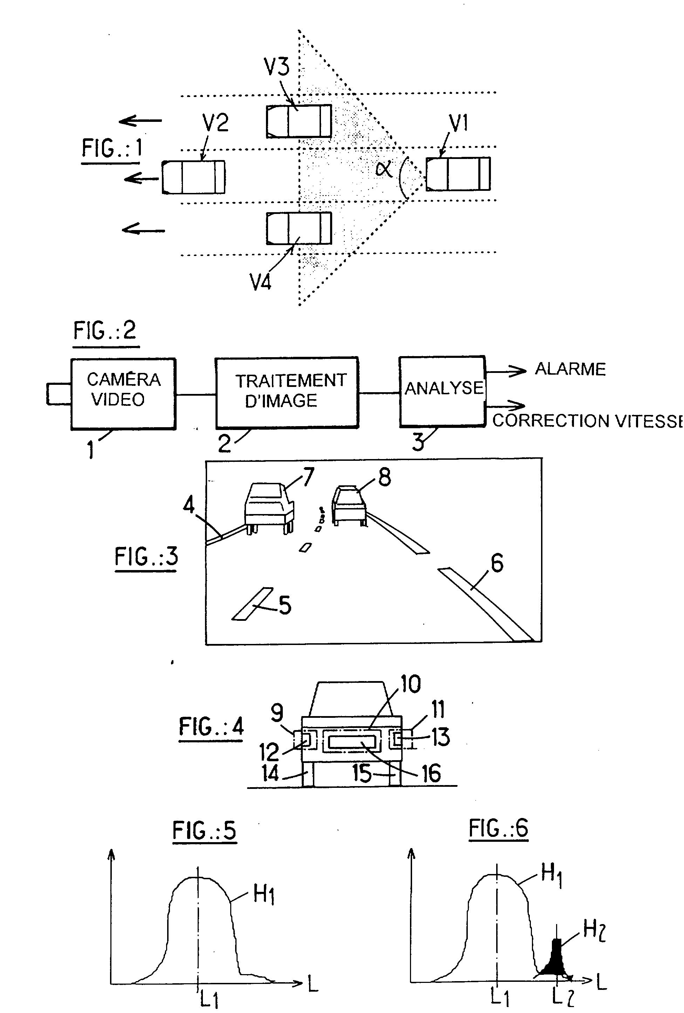

Cela est favorable aussi à la gestion intelligente de la vitesse du véhicule, comme on l'explique ci-dessous en liaison avec la figure 1 du dessin annexé, qui représente schématiquement trois voies de circulation dans le même sens d'une portion d'autoroute, par exemple. Quand le conducteur du véhicule V1 perçoit que le véhicule V2 situé en avant sur la même voie manifeste son intention de dégager cette voie, le conducteur du véhicule V1 peut préparer une accélération de son véhicule. De même, quand l'un quelconque des véhicules V3 et V4 manifeste son intention de s'engager sur la voie où circule le véhicule V1, le conducteur de V1 peut préparer une décélération de son véhicule propre à maintenir une distance de sécurité convenable avec le véhicule qui va bientôt le précéder sur cette voie.

La présente invention a précisément pour but de réaliser un dispositif d'aide à la conduite d'un véhicule automobile qui ne souffre pas des retards de réaction mentionnés ci-dessus affectant les dispositifs d'aide à la conduite connus de la technique antérieure, et qui soit capable d'assurer, en particulier, une gestion précoce, intelligente et sûre de cette conduite.

On atteint ces buts de l'invention, ainsi que d'autres qui apparaîtront à la lecture de la description qui va suivre, avec un dispositif d'aide à la conduite d'un véhicule automobile, du type comprenant des moyens de surveillance des évolutions des véhicules voisins, ce dispositif étant remarquable en ce que lesdits moyens comprennent des moyens pour diagnostiquer automatiquement l'imminence d'un changement de direction d'un véhicule précédent.

Suivant d'autres caractéristiques du dispositif selon l'invention, lesdits moyens de diagnostic automatique sont sensibles à l'activation d'un indicateur visuel de changement de direction à commande manuelle, installé dans le véhicule précédent. Les moyens de diagnostic comprennent à cet effet une caméra vidéo d'enregistrement d'images représentatives de l'espace situé en avant dudit véhicule automobile, des moyens de traitement des images vidéo enregistrées, et des moyens d'analyse des résultats dudit traitement propres à détecter l'état d'activation dudit indicateur visuel installé sur ledit véhicule précédent.

Suivant un mode de réalisation particulier de la présente invention, les moyens de traitement comprennent des moyens de positionnement d'au moins une fenêtre de recherche dans chacune desdites images traitées, centrée sur l'image dudit indicateur visuel, et des moyens de formation d'un histogramme de luminance dans ladite fenêtre, les histogrammes ainsi successivement formés étant délivrés auxdits moyens d'analyse qui en déduisent l'état dudit l'indicateur visuel.

D'autres caractéristiques et avantages de la présente invention apparaîtront à la lecture de la description qui va suivre et à l'examen du dessin annexé dans lequel :
- la figure 1 est un schéma d'une chaussée de circulation automobile, décrite en préambule de la présente description,
- la figure 2 est un schéma fonctionnel du dispositif d'aide à la conduite suivant la présente invention,
- la figure 3 illustre un traitement d'images mis en oeuvre par le dispositif suivant la présente invention,
- la figure 4 illustre la localisation de "fenêtres d'observation" sur une image traitée d'un véhicule observé par le dispositif de la figure 2,
- les figures 5 et 6 sont des histogrammes de luminance exploités par ce dispositif, et
- la figure 7 est l'organigramme d'un programme de détermination de l'état d'activation d'un indicateur visuel clignotant de changement de direction équipant le véhicule observé, exécuté par le dispositif suivant l'invention.

On se réfère aux figures 1 et 2 du dessin annexé où il apparaît que le dispositif suivant l'invention comprend essentiellement une caméra vidéo 1 montée sur un véhicule tel que le véhicule V1 du schéma de la figure 1, de manière à pouvoir enregistrer des images successives, dans un large champ d'angle d'ouverture horizontale a, couvrant l'ensemble des véhicules V2,V3,V4 qui précèdent immédiatement le véhicule V1 et qui roulent dans le même sens de circulation, sur les trois voies de circulation représentées.

Suivant une caractéristique importante de la présente invention, les images enregistrées par la caméra vidéo 1 sont transmises à des moyens de traitement électronique d'image 2 qui alimentent eux-mêmes des moyens d'analyse 3 des images traitées, de manière à assurer une détection automatique d'une activation d'un indicateur visuel de changement de direction particulier installé sur l'un des véhicules V2,V3,V4, et ceci dès que le conducteur du véhicule en cause déclenche cette activation par basculement manuel d'un organe de manoeuvre associé à cet indicateur.

Une telle détection est normalement opérée par le conducteur du véhicule V1 lui-même, qui doit être particulièrement attentif à l'activation de ces indicateur et en tenir compte pour régler la vitesse de son véhicule.

Cependant, quand le véhicule est équipé de moyens automatiques de régulation de vitesse, ou, plus généralement, de moyens d'aide à la conduite susceptibles d'agir automatiquement sur la vitesse du véhicule de manière à assurer, notamment, le respect de distances de sécurité suffisantes avec les véhicules voisins, on comprend qu'e la détection automatique des intentions de manoeuvre des conducteurs des véhicules V2,V3,V4 réalisée par l'invention permet d'assurer une commande précoce de ces moyens, plus efficace que celle obtenue avec les dispositifs d'aide à la conduite de la technique antérieure, qui n'interviennent qu'après que l'intention de manoeuvre se soit matérialisée par un changement de direction effectif du véhicule observé.

Pour ce faire, les images vidéo saisies par la caméra 1 sont soumises dans les moyens 2 à un traitement de segmentation bien connu, du type "extraction" de contours ou de régions de l'image par exemple, permettant de localiser, dans l'ensemble du champ observé, la position du ou des véhicules à surveiller, comme on l'a représenté schématiquement à la figure 3 du dessin annexé où on a fait apparaître les contours des éléments essentiels de l'image, à savoir les bandes 4,5,6 délimitant les voies de circulation et les véhicules 7,8 circulant sur ces voies, en avant du véhicule équipé du dispositif suivant l'invention.

Ce traitement permet ensuite de délimiter, à l'intérieur des contours des véhicules ainsi isolés, des fenêtres d'observation 9,10,11 (voir figure 4) contenant des informations pertinentes quand à l'état des indicateurs de changement de direction précités. Ces indicateurs 12,13, couramment appelés "clignotants" ou "feux clignotants" comme on l'a vu plus haut, sont localisés classiquement en arrière des roues arrière droite 14 et gauche 15 d'un véhicule, comme schématisé à la figure 4. Les fenêtres 9 et 10 sont ainsi centrées sur les feux clignotants arrière gauche 12 et arrière droite 13. La fenêtre 10 est centrée sur une zone de luminance de référence relativement stable, par exemple celle qui englobe la plaque d'immatriculation 16 du véhicule.

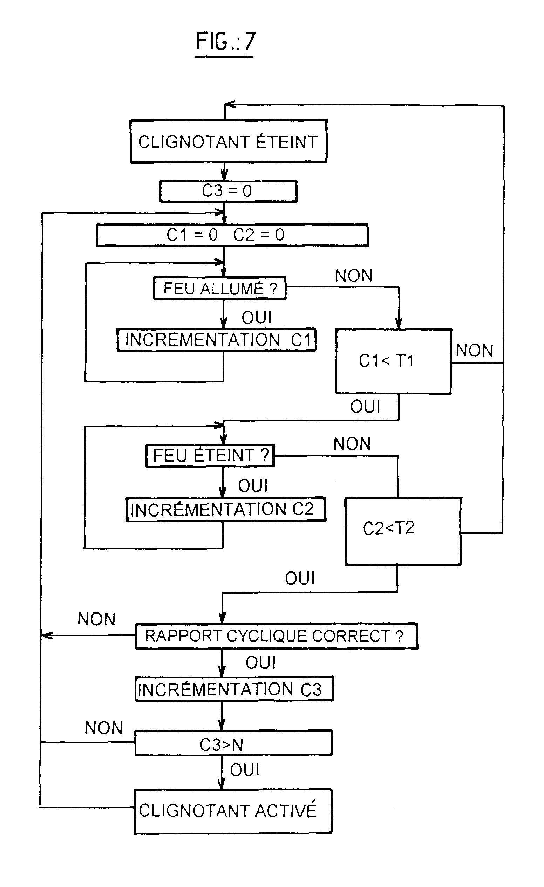

Les figures 5 et 6 représentent des histogrammes des fractions d'image englobées par le contour de la fenêtre 10 de référence et par le contour d'une des fenêtres 9 et 11, étant entendu que ce qui est décrit ci-dessous pour la fenêtre 9 s'applique évidemment aussi à la fenêtre 11.

L'histogramme H₁ de la figure 5 représente la distribution des luminances L, ou des niveaux de gris, des éléments d'image ou "pixels" contenus dans la fenêtre 10, de référence. Il a sensiblement une forme gaussienne centrée sur un pic d'abscisse L₁. Un tel histogramme est ainsi représentatif de celui de la fenêtre 9 quand le clignotant 12 est éteint.

Quand celui-ci s'allume, la forte luminance de la partie de la fenêtre 9 qui est occupée par l'image du feu 12 fait apparaître un histogramme H₂ dont le pic est centré sur une valeur de luminance L₂ très supérieure à celle du pic L₁ "de référence", comme représenté à la figure 6.

L'apparition d'un tel pic dans l'histogramme établi par les moyens de traitement d'images 2 est significative de l'activation du clignotant 12. La détection automatique de cette activation permet de commander automatiquement en conséquence un dispositif de régulation de vitesse du véhicule ou, plus généralement, un dispositif d'aide à la conduite, comme on l'a vu plus haut, et ceci, avantageusement, dès que l'imminence d'un changement de direction d'un véhicule voisin peut être diagnostiquée, et non seulement après l'engagement de ce changement de direction.

Il convient de rendre une telle détection aussi "robuste" que possible, dans l'environnement visuel particulièrement perturbé que constitue un espace consacré à la circulation de véhicules automobiles. Un tel environnement est en effet susceptible de tromper le dispositif décrit ci-dessus, sauf à équiper celui-ci de moyens de discrimination sûrs de l'activation d'un feu clignotant, parmi les nombreuses sources de lumière à émission continue ou discontinue qui encombrent ledit espace.

Le signal délivré par les moyens de traitement 2 sur la base du fenêtrage et de la réalisation d'histogrammes décrits ci-dessus est représentatif du fait que le feu émet de la lumière. Il convient de vérifier que cette émission s'opère à la cadence fixée par la réglementation, pour obtenir la confirmation de l'activation effective du feu, et donc de son interprétation en tant qu'intention de manoeuvre.

Pour ce faire, la présente invention fournit des moyens électroniques d'analyse 3 dûment programmés pour exécuter le programme dont l'organigramme est représenté à la figure 7 du dessin annexé. Ce programme fait appel au chargement et à la lecture de trois compteurs C1,C2,C3, dont les comptes enregistrés sont comparés à des comptes représentatifs d'un temps limite d'allumage T1 du feu, d'un temps d'extinction T2 du feu, fixés par la réglementation, lorsque le feu clignote pour avertir les autres conducteurs de l'imminence d'un changement de direction du véhicule, et d'un nombre N prédéterminé de cycles d'allumage/extinction dudit feu.

Les trois compteurs sont initialement mis à zéro. A la détection de l'allumage du feu (signalé par les moyens 2) le compteur 1 est régulièrement incrémenté pour fonctionner en compte-temps jusqu'à l'extinction du feu clignotant. Le compte enregistré dans C1 est alors comparé à un compte représentatif du temps d'allumage T1. Si le compte enregistré est inférieur à ce compte représentatif, et si l'extinction du feu perdure, on incrémente régulièrement le compteur C2 jusqu'au réallumage du feu. A ce moment, on compare le contenu de C2 à un compte représentatif du temps T2 d'extinction. Si ce contenu est inférieur à ce compte et si le rapport cyclique du cycle d'extinction/allumage est conforme à une valeur prédéterminée, on incrémente le compteur C3 jusqu'à l'achèvement du nombre N prédéterminé de cycles d'allumage/extinction validés. Un signal représentatif de l'état activé du clignotant est alors émis pour agir automatiquement sur la vitesse du véhicule par exemple, en fonction de l'intention de manoeuvre détectée du véhicule observé.

On comprend que le processus de détection automatique de l'activation d'un clignotant décrit ci-dessus permet de filtrer efficacement les signaux lumineux parasites non significatifs qui encombrent l'environnement des feux clignotants, et donc de sécuriser la détection des signaux utiles au bénéfice de la "robustesse" du dispositif suivant l'invention.

Il apparaît maintenant que l'invention permet bien d'atteindre le but fixé, à savoir assurer une détection automatique et sûre de l'imminence d'un changement de direction d'un véhicule précédant le véhicule équipé du dispositif suivant l'invention, cette détection permettant de mettre en oeuvre les mesures correctrices nécessaires plus tôt, et donc plus efficacement, que les dispositifs de la technique antérieure ne peuvent le faire.

Bien entendu, l'invention n'est pas limitée au mode de réalisation décrit et représenté qui n'a été donné qu'à titre d'exemple. C'est ainsi que la détection d'une émission de lumière par un feu clignotant pourrait être obtenues à l'aide de techniques de détection optique bien connues de l'homme de métier, autres que l'extraction de contours et l'établissement d'histogrammes. C'est ainsi encore que l'homme de métier pourrait concevoir des organigrammes de test autres que celui illustré à la figure 7, donné seulement à titre d'exemple.

De même, la détection automatique suivant l'invention' de l'imminence d'un changement de direction d'un véhicule pourrait être exploitée autrement que par une action automatique sur un dispositif de régulation de vitesse ou, plus généralement, d'aide à la conduite. C'est ainsi que cette détection pourrait servir à activer, par exemple, un signal d'alarme sonore propre à attirer l'attention du conducteur du véhicule sur l'imminence d'un changement de direction d'un véhicule précédent qu'il n'aurait pas déjà détecté visuellement, par défaut d'attention, par exemple.

## Revendications

1. Dispositif d'aide à la conduite d'un véhicule automobile comprenant des moyens de surveillance des évolutions des véhicules voisins, caractérisé en ce que lesdits moyens comprennent des moyens (1,2,3) pour diagnostiquer automatiquement l'imminence d'un changement de direction d'un véhicule précédent.

2. Dispositif conforme à la revendication 1, caractérisé en ce que lesdits moyens de diagnostic (1,2,3) automatiques sont sensibles à l'état d'au moins un indicateur visuel (12,13) de changement de direction à commande manuelle, installé dans ledit véhicule précédent.

3. Dispositif conforme à la revendication 2, caractérisé en ce que lesdits moyens de diagnostic (1,2,3) comprennent une caméra vidéo (1) d'enregistrement d'images représentatives de l'espace situé en avant dudit véhicule automobile, des moyens de traitement (2) des images vidéo enregistrées et des moyens d'analyse (3) des résultats dudit traitement propres à détecter l'état dudit indicateur visuel (12,13) installé sur ledit véhicule précédent.

4. Dispositif conforme à la revendication 3, caractérisé en ce que lesdits moyens de traitement (2) comprennent'des moyens de positionnement d'au moins une fenêtre de recherche dans chacune desdites images traitées, centrée sur l'image dudit indicateur visuel, et des moyens de formation d'un histogramme de luminance dans ladite fenêtre, les histogrammes ainsi successivement formés étant délivrés auxdits moyens d'analyse (3) qui en déduisent l'état dudit indicateur visuel (12,13).

5. Dispositif conforme à la revendication 4, caractérisé en ce que lesdits moyens d'analyse (3) comparent les temps d'extinction et d'allumage successifs d'un indicateur visuel clignotant (12,13) activé à des temps (T2,T1) respectifs prédéterminés, pour établir ledit diagnostic.

6. Dispositif conforme à la revendication 5, caractérisé en ce que lesdits moyens d'analyse (3) comparent en outre le rapport cyclique du cycle d'extinction/allumage dudit indicateur visuel (12,13), à une valeur prédéterminée, pour établir ledit diagnostic.

7. Dispositif conforme à la revendication 6, caractérisé en ce que les temps d'allumage et d'extinction dudit indicateur et ledit rapport cyclique sont observés sur plusieurs cycles d'extinction/allumage successifs, pour établir ledit diagnostic.

8. Dispositif conforme à l'une quelconque des revendications 1 à 7, caractérisé en ce que lesdits moyens de diagnostic (1,2,3) régulent automatiquement la vitesse du véhicule en fonction d'une distance prédéterminée de sécurité devant séparer ledit véhicule du véhicule observé.

9. Dispositif conforme à l'une quelconque des revendications 1 à 7, caractérisé en ce que lesdits moyens de diagnostic (1,2,3) excitent un organe d'alarme sonore du conducteur du véhicule.
